# EUROPEAN PATENT APPLICATION

(11) **EP 2 993 022 A2**
(43) Date of publication of application: **09.03.2016**
(21) Application number: 14195424.8
(22) Date of filing: 28.11.2014
(51) Int. Cl.: B29C 43/52, B29C 33/04

(54) **Cooling structure of pressing mold**

(30) Priority: 06.08.2014 TW 103214002 U
(71) Applicant: Porite Taiwan Co., Ltd., Zhunan Township 35059 (TW)
(72) Inventor: Chu, Chiou-Long, 35059 Zhunan Township (TW); Yeh, Tsong-Lin, 35059 Zhunan Township (TW); Lee, Huei-Long, 35059 Zhunan Township (TW); Hwang, Jiunn-Huei, 35059 Zhunan Township (TW)
(74) Representative: Huebner, Stefan Rolf

(57) **Abstract**

A cooling structure of a pressing mold (20) comprises an outlet (24) and an inlet (22), which are formed in a radial direction of the pressing mold. Furthermore, a cooling passage (26) is integrally formed inside the pressing mold in a hidden manner, and two ends of the cooling passage are connected to the inlet and the outlet, respectively. Also, the cooling passage, being a continuous structure, further has the position and curvature changing in correspondence with the circumferential direction and the axial height of the pressing mold. Furthermore, the cooling passage may be additionally formed inside a cooling ring (34) to be combined with an outer mold body (32) to form the pressing mold. Thus, the cooling passage is well closed, and the position changes of the cooling passage comprise the axial and circumferential directions of the mold or cooling ring, so that the larger cooling area and the good cooling effect are provided.

## Description

### BACKGROUND OF THE INVENTION

### Field of the Invention

The invention relates to the technical field of a mold structure, and more particularly to a cooling structure of a pressing mold, which may be applied to a powder metallurgy process.

### Related Art

Typically, a cooling liquid needs to be introduced into a mold, used in an injection molding process or a pressing molding process, to decrease the temperatures of the mold and the product. Conventional cooling liquid channels may be formed by way of drilling to form straight channels inside the mold or by way of arranging cooling conduits on the surface of the mold. For example, Taiwan Patent No. M312420 discloses straight cooling passages. This cooling passage structure is applicable to a planar mold, such as the injection mold, and is not suitable for the pressing mold. In addition, forming the cooling passage by way of drilling is significantly difficult and time-consuming.

Taiwan Patent No. 1245699 discloses a shaping mold having cooling passages, wherein the cooling passages comprise a first passage formed in an embedded block, and a second passage formed in a body. The first passage is formed on the surface of the embedded block, so one side of the first passage has an open structure. The second passage is formed on a bottom surface of a slot way of the body, so one side of the second passage has an open structure. The embedded block is mounted in the slot way of the body, and the open side of the first passage matches with the open side of the second passage to form a closed cooling passage. Although the cooling passage forms the closed structure using the first passage to rest against the second passage, the fitting portion tends to encounter the condition of leaking the cooling liquid. In addition, the first passage and the second passage are only formed on the embedded block and the surface of the slot way. According to the drawings of this patent, the first passage can correspond to the circumferential direction of the embedded block, the second passage can correspond to the circumferential direction of the slot. However, the first passage and the second passage have the fixed heights (depths), and significantly have no height change. Thus, the flowing range or the flowing area of the cooling liquid inside the cooling liquid channel is small. For the mold and product, the cooling effect of the cooling passage structure is poor.

In addition, Taiwan Patent Publication No. 200927332 discloses a cooling passage formed inside a mold, wherein the cooling passage surrounds a cavity. Because one side of the cooling passage has an open structure, a cover plate needs to be locked with one side of the mold to close the cooling passage. Because the cooling passage needs to be used in conjunction with the cover plate to form the closed structure, the fitting portion between the cover plate and the cooling passage tends to encounter the condition of leaking the cooling liquid.

### SUMMARY OF THE INVENTION

An object of the invention is to provide a cooling structure of a mold, which may be applied to a pressing mold or an injection mold, and is well and completely closed to achieve the effect of decreasing the leakage of the cooling liquid. In addition, the cooling structure of the invention can provide the larger cooling area or range, so that the cooling efficiency of the mold and the product can be enhanced.

To achieve the above-identified object and effect, the cooling structure of the invention comprises an outlet and an inlet, which correspond to a radial direction of a pressing mold. A cooling passage is integrally formed inside the pressing mold and connected to the inlet and the outlet. In addition, the cooling passage is an annular continuous structure having a position changing in correspondence with the circumferential direction and the axial height of the pressing mold.

Because the cooling passage is integrally formed inside the pressing mold, the cooling passage is hidden and well closed. Also, the position changes of the cooling passage comprise the axial and circumferential directions of the mold, so the larger cooling area and the good cooling effect can be obtained.

### BRIEF DESCRIPTION OF THE DRAWINGS

FIG. 1 is a schematic exterior view showing a first embodiment of the invention.
FIG. 2 is a schematic structure view showing a pressing mold of the first embodiment of the invention having inner continuous U-shaped cooling passages.
FIG. 3 is a schematic structure view showing a pressing mold of the first embodiment of the invention having an inner helical cooling passage.
FIG. 4 is a schematic exterior view showing a second embodiment of the invention.
FIG. 5 is a schematic structure view showing a cooling ring of the second embodiment of the invention having inner continuous U-shaped cooling passages.
FIG. 6 is a schematic structure view showing a cooling ring of the second embodiment of the invention having an inner helical cooling passage.
FIG. 7 is a schematic view showing the alignment between an outer mold body and the cooling ring of the second embodiment of the invention.

### DETAILED DESCRIPTION OF THE INVENTION

According to the objects and effects of the invention, the present invention will become more fully understood from the detailed description given hereinbelow and the accompanying drawings which are given by way of illustration only, and thus are not limitative of the structure of the pressing mold of present invention.

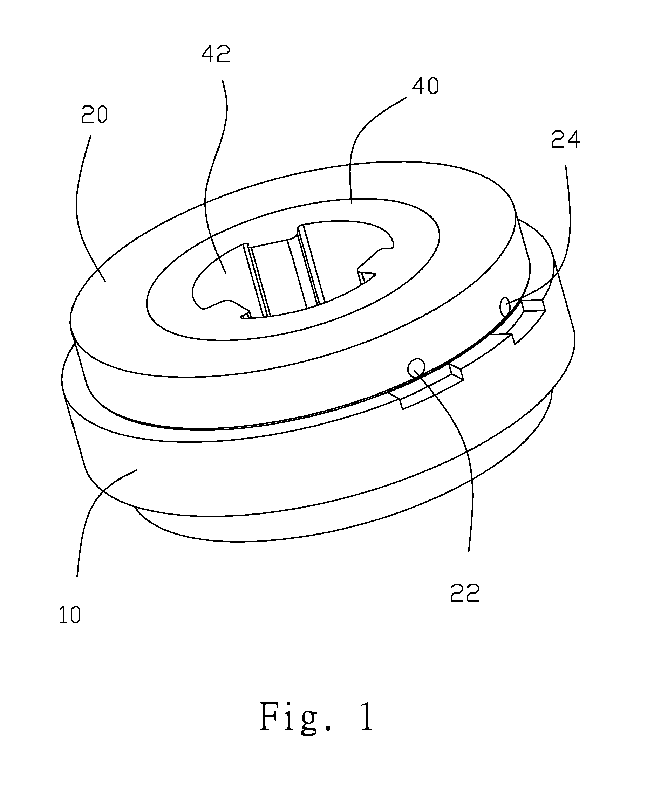

As shown in FIG. 1, a pressing mold 20 is disposed in an axial direction of a mold base 10, and a core 40 is disposed in the axial direction of the pressing mold 20. The center of the core 40 is formed with a cavity 42. When pressing molding, such as powder metallurgy molding, is performed, the metal powder may be filled into the cavity 42, and a pressure is applied, so that the metal powder is combined into the product with the predetermined shape. Next, the inside of the pressing mold 20 is formed with a cooling passage (not shown), and an inlet 22 and an outlet 24 both connected to the cooling passage are formed in the radial direction of the pressing mold 20. It is to be noted that the cooling passage cannot be seen from the outward appearance of the pressing mold 20, so the cooling passage is completely hidden in the pressing mold 20.

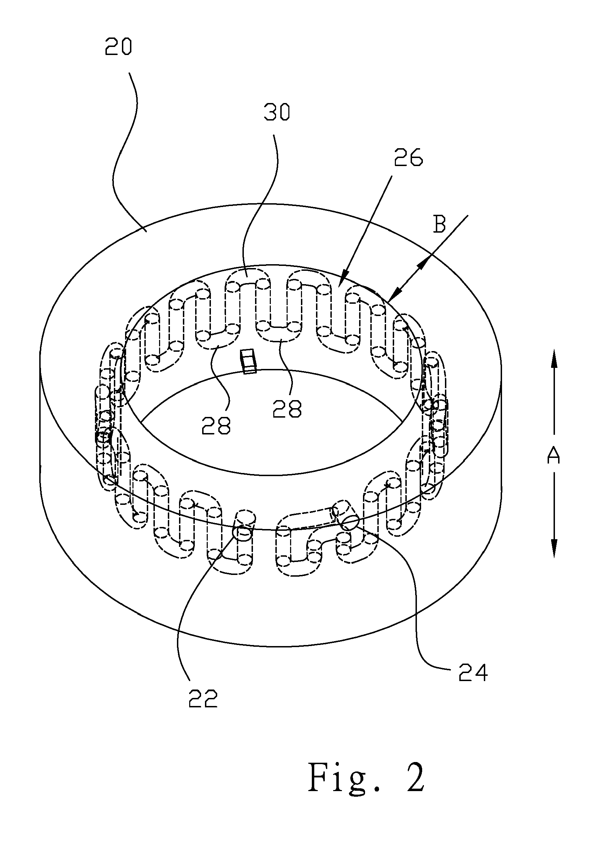

As shown in FIG. 2, because the cooling passage 26 is hidden in the pressing mold 20, the pressing mold 20 of the invention can be manufactured by way of three-dimensional printing (3D Printing). More particularly, when the pressing mold 20 is manufactured, the cooling passage 26 is synchronously integrally formed, and two ends of the cooling passage 26 are connected to the inlet 22 and the outlet 24, respectively.

Furthermore, the cooling passage 26 may comprise a plurality of U-shaped passage units 28 each corresponding to the axial direction of the pressing mold 20, such as the direction A in the drawing. In addition, the arranged direction of each U-shaped passage unit 28 corresponds to the circumferential direction of the pressing mold 20. Two neighboring U-shaped passage units 28 are connected together through a connection passage 30. Thus, the cooling passage 26 can form the annular continuous structure having the position changing in correspondence with the circumferential direction and the axial height of the pressing mold 20. As shown in the drawing, the pressing mold 20 has the circular circumferential direction and the longitudinal axial direction. The radial direction of the pressing mold 20, such as the direction B shown in the drawing, is the thickness direction of the transversal wall.

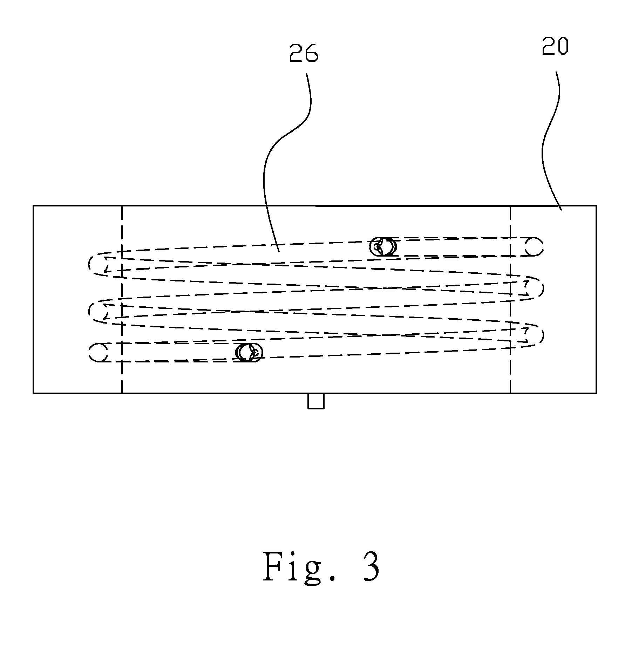

As shown in FIG. 3, another cooling passage 26 forms the annular continuous structure having the position changing with the circumferential direction and the axial height of the pressing mold 20, so that the cooling passage 26 forms the helical shape.

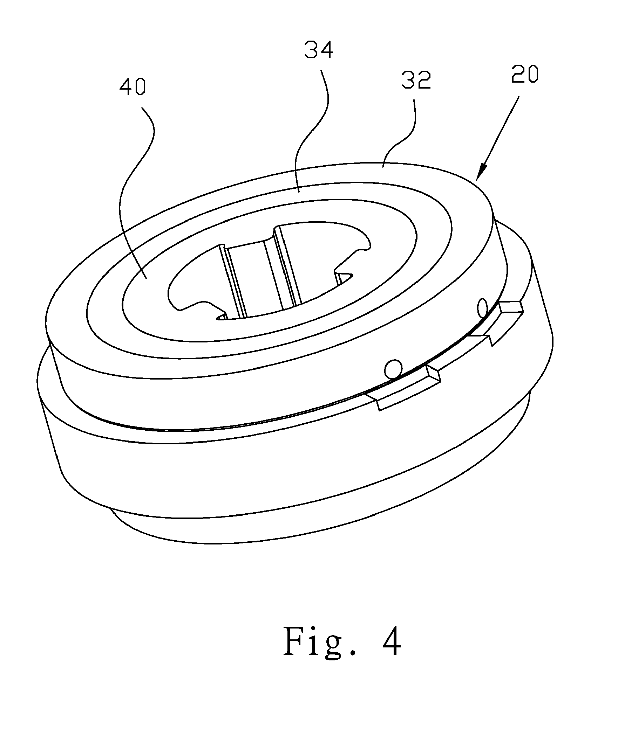

As shown in FIG. 4, the pressing mold 20 of the invention may comprise an outer mold body 32 and a cooling ring 34. The core 40 is installed inside the cooling ring 34 in the axial direction.

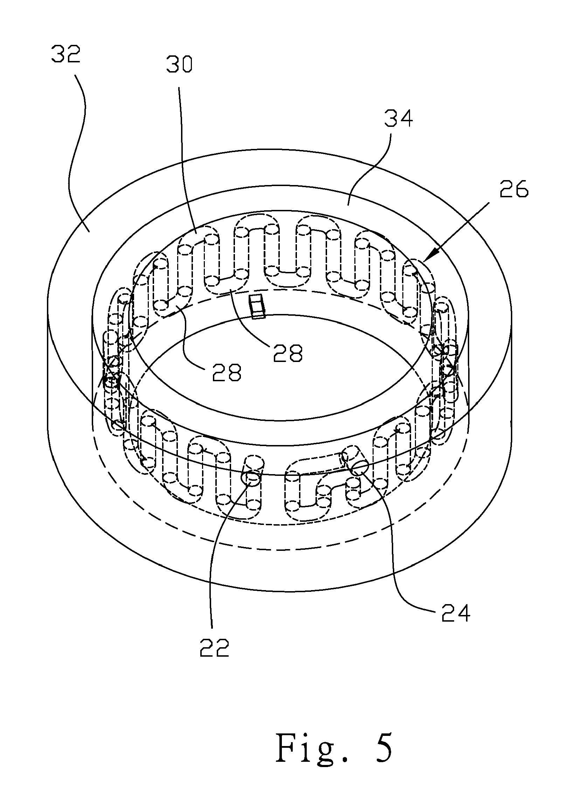

As shown in FIG. 5, the cooling ring 34 may be manufactured by way of three-dimensional printing. More particularly, when the cooling ring 34 is being manufactured, the cooling passage 26 is synchronously and integrally formed while the two ends of the cooling passage 26 having the annular continuous structure are connected to the inlet 22 and the outlet 24, respectively. Because the cooling ring 34 and the cooling passage 34 are manufactured by way of 3D printing, the cooling passage 26 can be hidden in the cooling ring 34. The outer mold body 32 may be manufactured and molded in a typical manner.

The cooling passage 26 in the cooling ring 34 comprises a plurality of U-shaped passage units 28 each corresponding to the axial direction of the cooling ring 34, and is arranged in correspondence with the circumferential direction of the cooling ring 34. Two neighboring U-shaped passage units 28 are connected together through a connection passage 30. Thus, the structure of the cooling passage 26 is an annular continuous structure and has the position changing in correspondence with the circumferential direction and the axial height of the cooling ring 34. As shown in the drawing, the cooling ring 34 is circular in the circumferential direction, the axial height of the cooling ring 34 is the longitudinal thickness, and the radial direction of the cooling ring 34 corresponds to the thickness of the transversal wall.

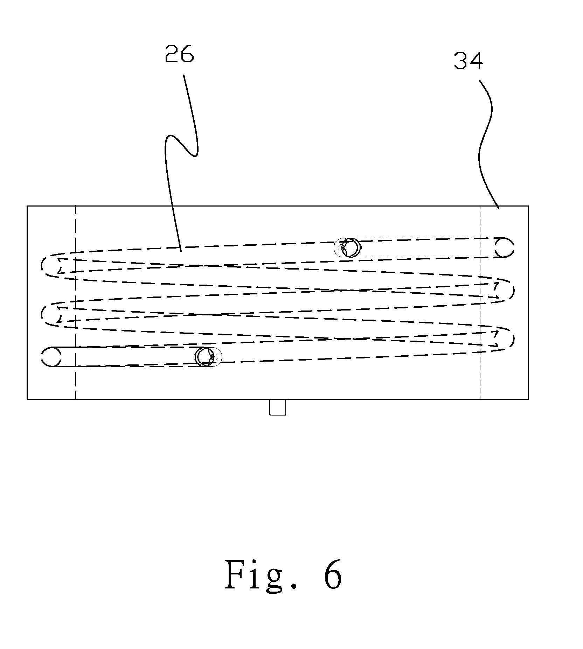

As shown in FIG. 6, another annular continuous structure has the helical cooling passage 26. Thus, the cooling passage 26 may have the position changing in correspondence with the circumferential direction and the axial height of the cooling ring 34.

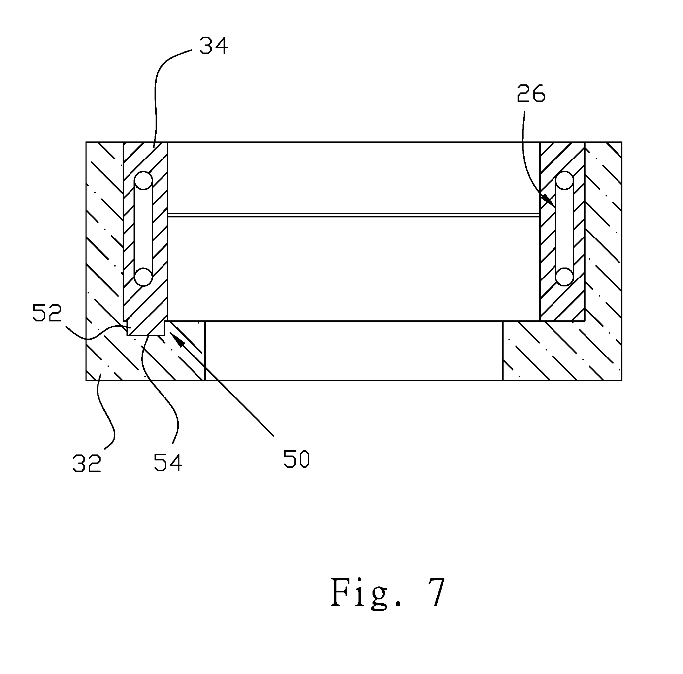

Referring to FIG. 7, the invention comprises an alignment mechanism 50. The alignment mechanism 50 is disposed between the cooling ring 34 and the outer mold body 32. The cooling ring 34 and the outer mold body 32 may be positioned and combined using the alignment mechanism 50. Furthermore, the alignment mechanism 50 comprises a projection 52 and a slot 54. The projection 52 is formed on the cooling ring 34, and the slot 54 is formed on the outer mold body 32.

In addition, the slot 54 of the alignment mechanism 50 may be formed on the cooling ring 34, and the projection 52 may be formed on the outer mold body 32. Thus, the positioning effect can be obtained when the cooling ring 34 is combined with the outer mold body 32.

In addition, as shown in FIG. 7, the cooling passage 26 is disposed inside the wall of the cooling ring 34 in the thickness direction of the wall, so that the cooling passage 26 is hidden.

It is obtained, from the above-mentioned embodiment, that the manufacturing method of 3D printing can make the cooling passage 26 be integrally formed jointly with the pressing mold 20 or the cooling ring 34, so the cooling passage 26 has the complete and excellent closing property to decrease the leakage of the cooling liquid.

The cooling passage 26 surrounds the pressing mold 20 or the cooling ring 34 in correspondence with the circumferential direction of the pressing mold 20 or the cooling ring 34, and thus surrounds the cavity 42. Also, the cooling passage 26 may have the position changing in correspondence with the axial height of the pressing mold 20 or the cooling ring 34, so the cooling passage 26 of the annular continuous structure has the large cooling area to enhance the cooling efficiency of the mold and the product.

While the present invention has been described by way of examples and in terms of preferred embodiments, it is to be understood that the present invention is not limited thereto. To the contrary, it is intended to cover various modifications. Therefore, the scope of the appended claims should be accorded the broadest interpretation so as to encompass all such modifications.

## Claims

1. A cooling structure formed in a pressing mold, the cooling structure comprising:
an inlet formed in a radial direction of the pressing mold;
an outlet formed in the radial direction of the pressing mold; and
a cooling passage having two ends connected to the inlet and the outlet, respectively,
wherein the cooling passage is integrally formed inside the pressing mold, the cooling passage is hidden inside the pressing mold, the cooling passage is an annular continuous structure, and the cooling passage has a position changing in correspondence with a circumferential direction and an axial height of the pressing mold.

2. The cooling structure according to claim 1, wherein the cooling passage comprises a plurality of U-shaped passage units each corresponding to an axial direction of the pressing mold, an arranged direction of each of the U-shaped passage units corresponds to the circumferential direction of the pressing mold, and two neighboring U-shaped passage units of the U-shaped passage units are connected together through a connection passage, so that the cooling passage has the position changing in correspondence with the circumferential direction and the axial height of the pressing mold.

3. The cooling structure according to claim 1, wherein the cooling passage has a helical structure, and the cooling passage forms the helical structure along the circumferential direction and the axial height of the pressing mold, so that the cooling passage has the position changing in correspondence with the circumferential direction and the axial height of the pressing mold.

4. The cooling structure according to claim 1, wherein the pressing mold comprises an outer mold body, a cooling ring and a core, the cooling ring is embedded into the outer mold body in an axial direction of the outer mold body, the core is embedded into the cooling ring in an axial direction of the cooling ring, the outlet and the inlet are formed in a radial direction of the cooling ring, and the cooling passage is integrally formed inside the cooling ring, so that the cooling passage is hidden in the cooling ring, and the cooling passage has the position changing in correspondence with a circumferential direction and an axial height of the cooling ring.

5. The cooling structure according to claim 4, further comprising an alignment mechanism disposed between the cooling ring and the outer mold body, wherein the cooling ring and the outer mold body are positioned and combined together through the alignment mechanism.

6. The cooling structure according to claim 5, wherein the alignment mechanism comprises a projection and a slot, the projection is formed on the cooling ring, and the slot is formed on the outer mold body.

7. The cooling structure according to claim 1, wherein the pressing mold is formed by way of three-dimensional printing, and the pressing mold is integrally formed with the inlet, the outlet and the cooling passage.

8. The cooling structure according to claim 2, wherein the pressing mold is formed by way of three-dimensional printing, and the pressing mold is integrally formed with the inlet, the outlet and the cooling passage.

9. The cooling structure according to claim 3, wherein the pressing mold is formed by way of three-dimensional printing, and the pressing mold is integrally formed with the inlet, the outlet and the cooling passage.

10. The cooling structure according to claim 4, wherein the cooling ring is formed by way of three-dimensional printing, and the cooling ring is integrally formed with the inlet, the outlet and the cooling passage.
